(19) Europäisches Patentamt

European Patent Office

Office européen des brevets

(11) **EP 1 238 245 B1**

(12) **FASCICULE DE BREVET EUROPEEN**

(45) Date de publication et mention
de la délivrance du brevet:
**27.04.2005 Bulletin 2005/17**

(21) Numéro de dépôt: **00988933.8**

(22) Date de dépôt: **15.12.2000**

(51) Int Cl.⁷: $G01C\ 7/04$, E01C 23/01

(86) Numéro de dépôt international:
**PCT/FR2000/003555**

(87) Numéro de publication internationale:
**WO 2001/044754 (21.06.2001 Gazette 2001/25)**

(54) **MESURE DU PROFIL D'UNE CHAUSSEE**

FAHRBAHNDECKENPROFILMESSUNG

METHOD FOR MEASURING THE PROFILE OF A ROAD

(84) Etats contractants désignés:
**AT BE CH CY DE DK ES FI FR GB GR IE IT LI LU
MC NL PT SE TR**

(30) Priorité: **17.12.1999 FR 9915954**

(43) Date de publication de la demande:
**11.09.2002 Bulletin 2002/37**

(73) Titulaire: **LABORATOIRE CENTRAL DES PONTS
ET CHAUSSEES
75015 Paris (FR)**

(72) Inventeur: **DUCROS, Daniel-Marc
F-44200 Nantes (FR)**

(74) Mandataire: **Dronne, Guy et al
Cabinet Beau de Loménie,
158, rue de l'Université
75340 Paris Cedex 07 (FR)**

(56) Documents cités:
**US-A- 4 571 695**  **US-A- 5 065 618**
**US-A- 5 280 719**  **US-A- 5 753 808**

**Description**

L'invention concerne le domaine de la mesure des défauts de planéité des chaussées routières ou autoroutières, des voies de circulation de véhicules de tous types, ainsi que des pistes d'aviation.

Les défauts de planéité des chaussées routières ou autoroutières, des voies de circulation de tous types, ainsi que des pistes d'aviation, sont générateurs d'inconvénients importants pour les usagers ainsi que pour les ouvrages eux-mêmes. Pour les usagers, de nombreuses études ont mis en évidence que le confort, la sécurité et les coûts d'utilisation des véhicules sont fortement influencés par les vibrations induites par les défauts de planéité. Pour les ouvrages eux-mêmes, ces défauts induisent des contraintes supplémentaires qui abrègent leur durée de vie.

De ce fait, les textes réglementaires imposent de satisfaire à des niveaux de qualité minimum lors de la construction des ouvrages aussi bien pour assurer la satisfaction des usagers que pour assurer la pérennité de l'ouvrage. L'évaluation des qualités de planéité des ouvrages est également un des paramètres majeurs utilisé lors des inspections périodiques de ceux-ci dans le cadre de leur maintenance.

L'intérêt de disposer d'un moyen de mesure des défauts de planéité est donc évident, aussi bien pour les maîtres d'oeuvre que pour les maîtres d'ouvrages.

Dans la terminologie routière classique, il est d'usage d'utiliser les termes profil et défauts du profil plutôt que défaut de planéité, et un appareil capable de fournir une image du profil réel de la surface de la chaussée par échantillonnage selon une ou plusieurs lignes sensiblement parallèles à une direction donnée, en s'insérant dans la circulation normale, est appelé profilomètre dynamique, par opposition aux profilomètres statiques qui nécessitent la fermeture à la circulation, de la chaussée auscultée.

Il est à noter que tous les profilomètres existants donnent une image approchée du profil réel, d'une part, parce qu'ils ne relèvent pas l'intégralité de la surface, mais un nombre fini de lignes, d'autre part, parce qu'ils filtrent le profil réel et déforment celui-ci en amplitude et en phase dans les bandes de longueurs d'onde où leur réponse est différente ce l'unité et généralement en phase dans les bandes des fréquences où leur réponse en amplitude est unitaire.

En matière routière, on distingue généralement :

- la microtexture pour les longueurs d'ondes inférieures à 0,5mm,
- la macrotexture pour les longueurs d'ondes comprises entre 0,5mm et 50mm,
- la megatexture pour les longueurs d'ondes comprises entre 50mm et 0,5m,
- l'uni pour les longueurs d'ondes comprises entre 0,5m et 50m.

Les profilomètres dynamiques actuels peuvent être classés en deux grandes catégories :

- les profilomètres à référence inertielle, qui utilisent un horizon artificiel de type inertiel comme plan de référence, et mesurent les variations d'altitude par rapport à ce plan de référence pour estimer le profil ; par construction, ces appareils sont sensibles à la vitesse de la mesure et à la qualité de leur référence ;
- les profilomètres à référence géométrique pure, qui, partant d'une position connue, permettent de reconstruire le profil en déplaçant avec précision une règle ; par construction, ces appareils sont sensibles à la précision de déplacement de la règle ainsi qu'aux erreurs des mesures dont l'influence croît en général de façon exponentielle avec la distance.

L'état de la technique est illustré par le document W0 98/24977, publié le 11 juin 1998, qui montre un profilomètre embarqué à bord d'un véhicule qui comporte trois capteurs de mesure de distance sans contact, montés à l'avant du châssis du véhicule et alignés transversalement dans une direction perpendiculaire à la direction d'avancement du véhicule. ainsi qu'un système de mesure de la position des capteurs par rapport à un horizon fictif, ce système comportant notamment un accéléromètre pour mesurer l'accélération verticale et des inclinomètres pour mesurer les inclinaisons du châssis par rapport à l'horizon fictif, en roulis et en tangage. Chaque capteur fournit une indication de sa hauteur au-dessus de la chaussée. Ce profilomètre permet donc de reconstituer le profil selon trois traces sur la chaussée, une trace à droite du véhicule, une trace à gauche et une trace centrale, grâce à un calculateur relié aux différents dispositifs.

US 4 571 695 décrit un appareil qui a pour finalité de mesurer l'uni d'une chaussée, c'est-à-dire sa déformation en l'absence de charge par rapport à une surface idéale, et a également pour but de mesurer la déflexion d'une chaussée, c'est-à-dire sa déformation sous l'effet d'une charge par rapport à son état en l'absence de charge.

De par son principe, l'appareil décrit dans US 4 571 695 nécessite quatre capteurs identifiés par 10, 20, 30, 40 sur les figures 1 et 2. Ce document décrit une mesure d'uni à l'aide d'un système à mémoire, nécessitant une extrême précision dans le positionnement d'une mesure par rapport à une autre. Sous le nom de système à mémoire, on désigne un système de mesure où la valeur de la mesure $n$ dépend de la valeur de la mesure $k$ ou $k<n$. Ces systèmes présentent au moins deux particularités : d'une part, toute erreur sur la mesure k induit une erreur sur la mesure n et entraîne une prorogation des erreurs, d'autre part, il est en général nécessaire de faire des hypothèses sur la première mesure ou d'appliquer des corrections à posteriori sur l'ensemble des mesures, même si celles-ci ne comportent aucune erreur, afin de compenser l'absence d'antécédents pour la première mesure. Ainsi, dans le procédé de mesure décrit dans US 4 571 695, l'altitude de chaque point de mesure est une fonction des points précédemment mesurés et le pas d'échantillonnage des points de mesure est déterminé par la position relative des différents capteurs sur la poutre qui leur sert de support.

Le document US-A-5 753 808 décrit un procédé correspondant au préambule de la revendication 1.

L'invention s'est donné pour but de proposer un procédé pour reconstituer le profil d'une trace de chaussée qui permette de s'affranchir des oscillations du support des dispositifs de mesure (mouvement de caisse, s'il s'agit d'un véhicule), des variations de vitesse, des vitesses du support et des problèmes de phase, de l'influence de la géométrie de la poutre support sur le pas d'échantillonnage et de la nécessité d'utiliser les points précédents pour le calcul du point courant.

Le procédé selon l'invention est caractérisé par le fait que :

on déplace au-dessus de la chaussée trois capteurs de mesure de distance sans contact, alignés horizontalement dans la direction du déplacement et équidistants,
on mesure simultanément la hauteur de chacun de ces trois capteurs au-dessus de la chaussée,
on mesure la distance parcourue par l'un desdits capteurs,
on soustrait le double de la hauteur mesurée par le capteur médian de la somme des hauteurs mesurées par les capteurs d'extrémité.

Le calcul démontre, en effet, que le résultat de la soustraction est égal à un coefficient près de la fonction représentative du profil, et est indépendant de la position de l'horizon fictif utilisé dans les méthodes de calcul habituelles. Cette démonstration est décrite plus loin dans le présent mémoire. En outre, le coefficient ne comporte pas de terme de phase. Il en résulte que si l'on fait une Transformée de Fourier directe sur le signal représentatif du résultat de la soustraction, et que l'on applique aux résultats obtenus un simple coefficient multiplicateur sur les parties réelles et imaginaires, on obtiendra le profil initial par la Transformée de Fourier inverse.

De préférence, les trois capteurs de mesure sans contact recueillent simultanément la distance entre eux et la chaussée. Cette opération est renouvelée chaque fois que les capteurs ont été déplacés d'une distance choisie. Cette distance est fixe pour une série de mesures.

Le pas de distance est fixe pour une série de mesure correspondant à un échantillon ou à une portion de chaussée, mais ce pas de distance est modifiable à volonté. Il pourra être plus grand, lorsque l'on mesure l'uni ou la mégastructure de la chaussée, et plus faible, lorsque l'on mesure la microtexture ou la macrotexture de certains tronçons de chaussée.

Les capteurs de mesure de distance sans contact sont, de préférence, du type laser utilisant un principe de triangulation ou une méthode fondée sur la défocalisation, ainsi que cela est expliqué dans EP 0 278 269. Il est également envisageable d'utiliser des capteurs à ultrasons à haute fréquence ou des dispositifs de télémétrie usuels de précision permettant d'obtenir une résolution de l'ordre de 10 microns.

L'invention concerne également un dispositif pour la mise en oeuvre du procédé.

Ce dispositif est caractérisé par le fait qu'il comporte :

un bâti porteur susceptible d'être déplacé sur la chaussée,
une poutre longitudinale portée par ledit bâti de telle manière qu'elle soit sensiblement horizontale,
trois capteurs de mesure de distance sans contact montés alignes horizontalement sur ladite poutre et équidistants, et susceptibles de délivrer des signaux représentatifs de leur hauteur au-dessus de la chaussée,
un dispositif de mesure de la distance parcourue par le bâti, et
un calculateur recevant des signaux du dispositif de mesure de la distance parcourue par le bâti et des capteurs de mesure de distance sans contact.

De par le principe de la méthode de calcul utilisé, le dispositif proposé n'introduit pas de distorsion de phase sur la mesure du profil. Il permet de ce fait une reconstitution aisée du profil vrai à l'aide de méthodes simples de traitement du signal.

Le dispositif proposé n'utilise pas de référence inertielle. Il peut ainsi aisément être utilisé dans un trafic à vitesse variable, par exemple en ville, sans influence sur le résultat des mesures réalisées.

Le dispositif proposé n'est pas du type à référence géométrique pure. Il est donc moins sensible aux erreurs de mesure et moins exigeant sur la qualité de la référence de distance utilisée.

Le dispositif proposé utilisant des capteurs sans contact et fournissant des résultats indépendants des mouvements de son dispositif porteur, il peut être utilisé lors des opérations de construction des structures énoncées dans l'introduction.

Le dispositif proposé permet de réaliser aussi bien des mesures d'uni et de mégatexture en dynamique, que des mesures de microtexture et de macrotexture en statique.

Il est à noter que le bâti porteur peut être le châssis d'un véhicule traditionnel.

D'autres avantages et caractéristiques de l'invention ressortiront à la lecture de la description suivante faite à titre d'exemple et en référence aux dessins annexés dans lesquels :

la figure 1 montre le principe général de la méthode de calcul selon l'invention ;
la figure 2 montre un schéma de profilomètre mettant en ouvre le procédé selon l'invention ; et
la figure 3 montre un véhicule équipé du profilomètre de la figure 2.

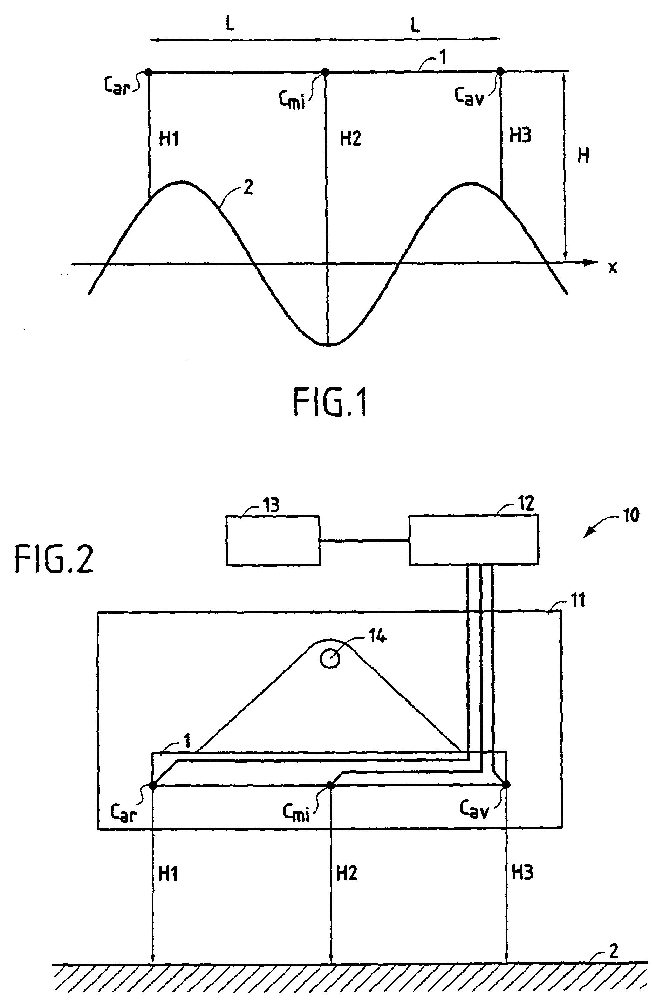

La figure 1 montre une poutre 1 horizontale que l'on déplace dans la direction x définie par l'axe de la poutre au-dessus d'une chaussée 2 qui comporte des défauts de planéité, à la distance moyenne H de celle-ci.

Sur cette poutre 1 sont montés trois capteurs de mesure de distance sans contact, référencés de l'avant vers l'arrière de la poutre 1 : Cav, Cmi et Car. Les capteurs avant Cav et arrière Car sont disposés à une distance L du capteur du milieu Cmi. La poutre 1 a donc au moins une longueur égale à 2L.

De préférence, les capteurs Cav, Cmi et Car comportent de manière connue un dispositif d'émission de signaux vers la chaussée 2, un dispositif de réception de l'écho réfléchi par la chaussée 2, un dispositif de mesure de l'écart de temps entre l'émission de signaux et la réception de l'écho et un dispositif de calcul de la hauteur de l'émetteur au-dessus de la chaussée 2. Un exemple de capteur de ce type est décrit dans EP 0 278 269.

Supposons que le profil de la chaussée soit une sinusoïde d'équation g (x), x étant l'abscisse du capteur du milieu Cmi.

En posant $\lambda$ égale la longueur d'onde de la sinusoïde g(x) on a :

$$g(x) = \sin (2\pi\ x/\lambda).$$

Soit H1 H2 et H3, les hauteurs respectives des capteurs Car, Cmi et Cav au-dessus de la chaussée.

On a:

$$H1 = H - \sin (2\pi\ (x-L)/\lambda)$$

$$H2 = H - \sin (2\pi\ x/\lambda)$$

$$H3 = H - \sin (2\pi\ (x+L)/\lambda)$$

En posant A = H1+H3-2H2 on obtient :

$$A = 2 \sin (2\pi\ x/\lambda)\ (1 - \cos (2\pi L/\lambda)\ )$$

$$A = 2\ (1- \cos (2\pi L/\lambda)\ )\ g(x)$$

L'équation A est à un coefficient de pondération près l'équation de la fonction g(x).

Il est important de noter que ce coefficient ne comporte pas de terme de phase. Il en résulte que si l'on fait une Transformée de Fourier directe sur le signal A, et que l'on applique aux résultats obtenus un simple coefficient multiplicateur sur les parties réelles et imaginaires on obtiendra le profil initial par la Transformée de Fourier inverse.

Si on effectue un échantillonnage spatial de pas P, et une Transformée de Fourier directe sur N échantillons, alors au point i de la Tansformée est associée la fréquence spatiale :

$$f(i) = i/NP$$

or

$$f(i) = 1/\lambda$$

d'où le coefficient multiplicateur :

$$k(i) = 1/(2\text{-}2 \cos (2\pi L \, i \, /NP))$$

Il est à noter que dans tout ce qui précède, la vitesse de déplacement de la poutre n'apparaît pas. La méthode est donc indépendante de la vitesse, ce qui permet d'appliquer la méthode sur un profilomètre porté par un véhicule qui peut s'intégrer dans n'importe quel flot de circulation.

Dans l'équation A, la hauteur H de la poutre 1 au-dessus de la chaussée n'apparaît pas.

Selon la méthode, la poutre 1 peut être déplacée verticalement sans nuire aux résultats obtenus. Il suffit que cette poutre 1 reste dans une position horizontale.

Lors des mesures, les trois capteurs Cav, Cmi et Car sont commandés par un calculateur afin de recueillir simultanément la distance entre eux et la chaussée.

Pour reconstituer le profil d'une chaussée 2, on détermine un point origine pour l'abscisse x, on mesure la distance x parcourue par le capteur du milieu Cmi au moyen d'un dispositif connu, un podomètre par exemple, on partage la distance parcourue en tronçons de chaussée. Dans chaque tronçon de chaussée, on effectue N mesures de hauteur H1 H2 H3 selon un échantillonnage de pas P fixe, et pour chaque mesure on calcule la valeur de A.

Lorsque N mesures ont été effectuées, on procède à la reconstitution du profil du tronçon correspondant au moyen d'un calculateur et de programmes de traitement de signal.

Le pas P est constant pour un tronçon donné, soit N échantillons. Mais ce pas P peut être modifié, lorsque l'on change de tronçon de chaussée.

Le coefficient de pondération, qui est l'inverse du coefficient multiplicateur k(i) s'annule si L est un multiple de $\lambda$. Il est donc en théorie impossible de voir les longueurs d'onde $\lambda$ sous multiples entiers de L. Ce problème est cependant sans importance, car si on utilise un échantillonnage spatial, les coefficients de pondération s'annulent pour L = k NP/i, k étant un nombre entier. Il suffirait alors en théorie de prendre pour L une valeur irrationnelle pour ne plus avoir de problème. En pratique, il suffira de prendre une longueur L suffisamment courte par rapport aux longueurs d'ondes étudiées pour ne pas rencontrer le problème.

Le coefficient de pondération décroît avec $\lambda$ dès que $\lambda$ est supérieure à 2 L. Pour $\lambda$ = 100 L, le coefficient de pondération est égal à 0.004, c'est-à-dire que si l'on veut mesurer le millimètre, il faut disposer de capteurs capables de mesurer le micron. En pratique, cette contrainte est moins forte qu'il n'y paraît, dans la mesure où la méthode est destinée à mesurer des profils routiers, dont les caractéristiques spectrales sont telles que les amplitudes correspondant aux longueurs d'ondes les plus grandes sont nettement plus importantes et ne requièrent pas la précision du millimètre. Il est toutefois clair à ce niveau que l'on s'éloigne du profil réel, cependant la distorsion par rapport à celui-ci est une compression des amplitudes qui est moins gênante qu'une distorsion de phase pour l'interprétation.

Les calculs effectués plus haut démontrent que la hauteur moyenne H de la poutre 1 au-dessus de la chaussée n'influence pas les mesures si la poutre 1 est horizontale. Dans le cas contraire, il faut introduire une contrainte sur la hauteur. En pratique, il suffit que la hauteur H soit sensiblement constante.

En effet, on démontre que lorsque les capteurs sont rigidement liés à la poutre 1, les oscillations de cette dernière se traduisent par une variation du pas de l'échantillonnage qui n'a pas d'influence pratique sur le spectre obtenu par la Transformée de Fourier directe. Dans le cas où les capteurs restent verticaux et que l'angle d'inclinaison de la poutre 1 est statistiquement nul, et la longueur d'onde $\lambda$ continue et d'amplitude constante, l'énergie du spectre sera la même qu'avec une poutre horizontale.

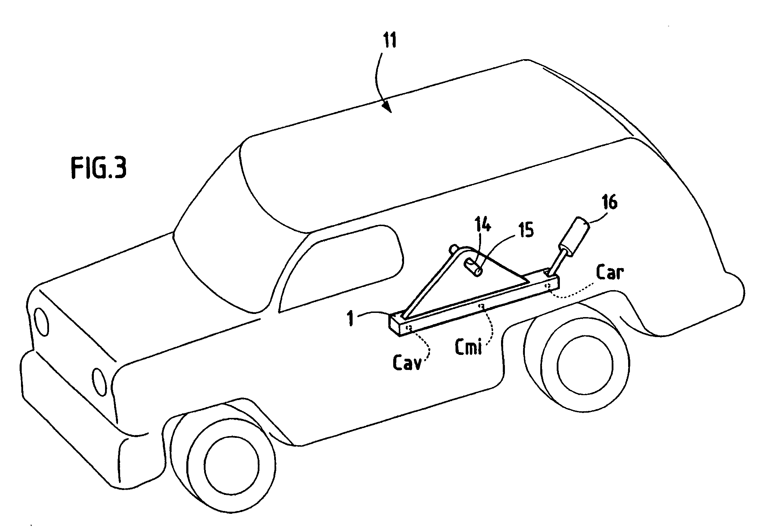

Les figures 2 et 3 montrent un dispositif 10 permettant de reconstituer le profil d'une chaussée.

Ce dispositif comporte essentiellement un bâti porteur 11, une poutre 1 équipée de trois capteurs équidistants Cav, Cmi et Car, un calculateur 12 et un dispositif 13 de mesure de la distance parcourue par le dispositif 10.

La nature du bâti porteur II est indifférente sous la seule restriction qu'il puisse se déplacer, en emportant la poutre 1, le calculateur 12 et le dispositif 13 de mesure de distance parcourue, sur les structures énoncées en introduction, routes ou autoroutes, à des vitesses comparables à celles des usagers sans créer de gêne ou de danger particuliers pour ceux-ci. Il est de ce fait possible d'utiliser à cet effet un véhicule de type monospace ou camionnette légère aménagée par un carrossier et muni de signalisation réglementaire pour les engins de mesure dynamique.

La poutre 1 est rigide et reliée au bâti porteur 11 par une articulation 14 lui permettant, d'une part, de rester dans un plan vertical parallèle à la direction de déplacement du bâti porteur 11, et, d'autre part, de conserver son horizontalité grâce à un dispositif d'asservissement. La rigidité de la poutre 1 pourra être obtenue soit par une forme adéquate, soit par l'utilisation de matériaux présentant une haute rigidité intrinsèque , du carbone/kevlar, des aciers spéciaux par exemple, soit par la combinaison des deux solutions précédentes.

Pour que la poutre 1 reste dans un plan vertical, il est possible d'utiliser la force de pesanteur à l'aide d'un axe 15 sur paliers orienté comme l'axe longitudinal du bâti porteur 11, avec un amortisseur 16 et un système permettant de compenser les forces centrifuges dans les virages.

L'horizontalité de la poutre 1 peut en outre être garantie par un dispositif d'asservissement inertiel ou par tout autre montage utilisant comme référence la gravité du lieu considéré.

Le calculateur 12 est relié aux capteurs Cav, Cmi, Car et au dispositif 13 de mesure de la distance parcourue. Les capteurs recueillent simultanément la distance entre eux et la chaussée à un pas de distance fixe pour une série de mesures afin de permettre la reconstitution du profil de la chaussée par le calculateur 12.

Les capteurs peuvent être du type à laser utilisant un principe de triangulation ou une méthode fondée sur la défocalisation. Il est également envisageable d'utiliser des ultrasons à haute fréquence, ou des dispositifs de télémétrie de précision usuels, permettant d'obtenir une résolution de l'ordre de 10 microns.

Le calculateur 12 remplit les fonctions suivantes : l'acquisition des signaux provenant du dispositif 13 de mesure de la distance parcourue, l'acquisition et la numérisation éventuelle des signaux issus des capteurs Cav, Cmi, Car en fonction des signaux de distance fournis par le dispositif 13, et la reconstitution du profil de la structure. Ces fonctions sont assurées à l'aide d'un ensemble d'algorithmes et de logiciels appropriés.

La partie matérielle du calculateur 12 peut être développée à partir de composants du commerce, ou à partir d'un processeur de type DSP. La puissance de calcul strictement nécessaire est inférieure à celle que peut développer un Pentium II™ de bas de gamme.

Le dispositif 13 de mesure de la distance parcourue doit envoyer au calculateur 12 des signaux lui permettant de déclencher des acquisitions avec un pas de mesure P connu. On peut utiliser un dispositif du type cinquième roue ou un codeur monté sur la boîte de vitesse du véhicule porteur, munis d'une électronique adaptée. L'utilisation de capteur à base d'effet Doppler est déconseillée si l'on souhaite pouvoir réaliser des mesures à basse vitesse.

Si l'on suppose un pas P d'échantillonnage de 2.5 cm et le calcul d'une Transformée de Fourier sur 8192 points, la distance parcourue pour cette série de mesures est de 204,8 m. En supposant que le véhicule porteur de l'appareil roule à une vitesse de 20 m/s, on dispose de 10 s pour faire la Transformée de Fourier. Or, sur un compatible PC équipé d'un Pentium 90, cette double transformée prend moins de 2 s.

Les tableaux suivants donnent des résultats obtenus avec un programme de simulation.

Les conditions de la simulation sont les suivantes :

- L = 0,33 m, pas P de l'échantillonnage = 0,1 m ;
- le profil routier est simulé aux caractéristiques spectrales analogues à celles d'une route réelle limitée aux longueurs d'ondes comprises entre 0,7 et 44,8 m ;
- un seul échantillon de 8192 points avec une pondération par fenêtre de Hanning ;
- calculs d'énergie effectués par sommation directe des carrés des modules des composantes de la Transformée de Fourier (sans pondération), seuls les cinq premiers chiffres significatifs sont indiqués, les énergies ne sont donc pas comparables pour les différentes gammes d'onde, mais uniquement pour une même gamme,
- l'écart moyen par rapport au profil est égal à la racine carrée de la somme des carrés des écarts point à point divisée par le nombre de points ;
- les calculs ont une précision d'environ 18 chiffres significatifs ;
- quatre cas sont traités : le profil réel, la poutre horizontale, la poutre oscillante pure à capteurs verticaux, et la poutre oscillante à capteurs liés à la poutre dite poutre "réelle" :

| Précision de mesure "infinie" | | | | |
|---|---|---|---|---|
| | Ener. GO | Ener. MO | Ener. PO | Ecarts |
| Profil réel | 12244 | 36406 | 10368 | 0,0002 |
| Poutre horizontale | 12314 | 36419 | 10368 | 0,0339 |
| Poutre oscillante pure | 12271 | 36483 | 10417 | 0,0396 |
| Poutre "réelle" | 12220 | 36482 | 10409 | 1,0036 |

| Précision de mesure 0,002 mm | | | | |
|---|---|---|---|---|
| | Ener. GO | Ener. MO | Ener. PO | Ecarts |
| Profil réel | 12244 | 36399 | 10365 | 0,0002 |
| Poutre horizontale | 12191 | 36036 | 10268 | 0,3712 |
| Poutre oscillante pure | 12155 | 36115 | 10316 | 0,9211 |
| Poutre "réelle" | 12103 | 36118 | 10311 | 1,7437 |

| Précision de mesure 0,02 mm | | | | |
|---|---|---|---|---|
| | Ener. GO | Ener. MO | Ener. PO | Ecarts |
| Profil réel | 12216 | 36345 | 10335 | 0,0002 |
| Poutre horizontale | 11192 | 33046 | 9415 | 4,123 |
| Poutre oscillante pure | 11135 | 33176 | 9442 | 3,662 |
| Poutre "réelle" | 11126 | 33288 | 9450 | 3,910 |

| Précision de mesure 0,05 mm | | | | |
|---|---|---|---|---|
| | Ener. GO | Ener. MO | Ener. PO | Ecarts |
| Profil réel | 12172 | 36241 | 10304 | 0,0004 |
| Poutre horizontale | 10235 | 28648 | 8141 | 11,46 |
| Poutre oscillante pure | 10227 | 28393 | 8206 | 7,80 |
| Poutre "réelle" | 9807 | 28834 | 8135 | 6,84 |

Il ressort en première analyse de ces tableaux que :

- les résultats obtenus en "précision infinie" sont parfaitement cohérents avec l'approche théorique ce qui tendrait à prouver la validité de la démarche,
- si l'on veut faire de la profilométrie pure, il convient d'une part d'avoir une précision d'au moins 0,002 mm, d'autre part d'être dans les conditions où la poutre est horizontale. Technologiquement, ces conditions sont possibles à réaliser, même si elles sont coûteuses,
- certains résultats peuvent paraître étonnants, notamment les écarts pour les précisions de 0,02 et 0,05 mm, où les poutres mobiles donnent de meilleures valeurs que la poutre horizontale. cela est sans doute dû à la nature de la simulation où l'inclinaison est aléatoire et les variations compenseraient la résolution.

Si l'on s'intéresse uniquement aux mesures d'énergie, il est à constater que l'énergie GO mesurée par la poutre est très proche de l'énergie théorique, ce qui peut s'interpréter comme le fait que la longueur de la poutre pourrait encore être réduite sans affecter ses performances et lui permettre de descendre dans le domaine de la mégatexture.
Il est par ailleurs à noter que si les énergies mesurées et réelles paraissent assez différentes ; en termes de notes d'uni, c'est-à-dire du logarithme de ces énergies, les écarts sont de l'ordre du pour-cent avec une précision de mesure de 0,02 mm, il apparaît alors que l'appareil permet d'évaluer l'uni en terme de notes avec des capteurs courants en métrologie.
Il est bien évident que ces résultats sont faussés par rapport à la réalité qu'ils sont censés mesurer ; en effet comme il a été indiqué, le contenu de la route synthétique, ne comprend, par construction, que les longueurs d'ondes comprises entre 0,7 et 44,8 m, ce qui n'est pas le cas d'une route réelle, et il faut bien se résoudre à filtrer le signal entrant dans les capteurs. Cependant la poutre n'apportant pas par elle-même de distorsion de phase, il est possible d'employer des filtres à variation de phase connue (par exemple des filtres à phase linéaire), et de corriger le signal en phase comme il l'est en amplitude pour reconstituer le profil réel dans la gamme d'onde précitée. On pourrait également penser à échantillonner assez finement pour que le repliement de spectre ne perturbe pas les mesures dans les bandes d'ondes utilisées.

La méthode s'applique dans le domaine de l'uni et de la mégatexture lorsque le véhicule circule à une vitesse normale. Elle s'applique également dans les domaines de la macrotexture et de la microtexture si le véhicule circule à faible vitesse.

**Revendications**

1. Procédé pour reconstituer le profil d'une chaussée, dans lequel on déplace au-dessus de la chaussée (2), trois capteurs (Cav, Cmi, Car) de mesure de distance sans contact, alignés dans la direction du déplacement et équidistants, et qui fournissent à un pas (P) de distance fixe pour une série de mesures, des signaux représentatifs de leur hauteur (H1, H2, H3) au dessus de la chaussée, on mesure la distance parcourue par l'un desdits capteurs, et on obtient un information représentative du profil longitudinal de la chaussée (2) en soustrayant le double de la hauteur (H2) mesurée par le capteur médian (Cmi) de la somme des hauteurs (H1, H3) mesurées par les capteurs d'extrémité (Cav, Car), **caractérisé par le fait que** :

   on fait porter les capteurs (Cav, Cmi, Car) par une poutre rigide maintenue en permanence à l'horizontale, on mesure simultanément la hauteur de chacun des capteurs au-dessus de la chaussée (2) à chaque pas (P) de distance indépendant de la distance entre les capteurs, et on applique à l'information représentative du profil longitudinal de la chaussée un traitement mathématique utilisant les Transformées de Fourier directes et inverses pour en déduire le profil longitudinal de la chaussée.

2. Procédé selon la revendication 1, **caractérisé par le fait que** le pas (P) de distance est modifiable.

3. Dispositif pour la mise en oeuvre du procédé selon l'une des revendications 1 ou 2, **caractérisé par le fait qu'**il comporte :

   un bâti porteur (11) susceptible d'être déplacé sur la chaussée (2),
   une poutre (1) montée sur ledit bâti (11) de telle manière qu'elle soit maintenue en permanence horizontale, quelle que soit la pente de la chaussée (2) sur laquelle circule ledit bâti, trois capteurs (Cav, Cmi, Car) de mesure de distance sans contact montés alignés sur ladite poutre (1) et équidistants, et susceptibles de délivrer des signaux représentatifs de leur hauteur au-dessus de la chaussée,
   un dispositif (13) de mesure du déplacement du bâti porteur, et
   un calculateur (12) recevant des signaux du dispositif (13) de mesure du déplacement et des capteurs (Cav, Cmi, Car) de mesure de distance, ledit calculateur (12) déclenchant simultanément des acquisitions par les capteurs de mesure de distance sans contact avec un pas (P) de mesure connu indépendant de la distance entre les capteurs, et effectuant un traitement mathématique sur les résultats desdites mesures de hauteur de nature à obtenir le profil de la chaussée.

**Patentansprüche**

1. Verfahren zum Rekonstituieren des Profils einer Fahrbahn, bei dem man über der Fahrbahn (2) drei Sensoren (Cav, Cmi, Car) zur kontaktlosen Distanzmessung bewegt, die in Fortbewegungsrichtung hintereinander und in gleichem Abstand angeordnet sind und die in einem festen Abstandsschritt (P) für eine Reihe von Messungen Signale liefern, die repräsentativ für ihre Höhe (H1, H2, H3) über der Fahrbahn sind, man den von einem der Sensoren durchlaufene Distanz misst und eine Information erhält, die für das Längsprofil der Fahrbahn (2) repräsentativ ist, indem man das Doppelte der Höhe (H2), gemessen von dem mittleren Sensor (Cmi) von der Summe der Höhen (H1, H3), gemessen von den Endsensoren (Cav, Car) subtrahiert, **dadurch gekennzeichnet, dass** man:

   die Sensoren (Cav, Cmi, Car) von einem ständig in der Horizontalen gehaltenen, steifen Träger tragen lässt, man gleichzeitig die Höhe von jedem der Sensoren über der Fahrbahn (2) in jedem Abstandschritt (P) unabhängig vom Abstand zwischen den Sensoren misst, und man auf die für das Längsprofil der Fahrbahn repräsentative Information eine mathematische Verarbeitung anwendet, das die direkten und inversen Fourier-Transformierten verwendet, um daraus das Längsprofil der Fahrbahn abzuleiten.

2. Verfahren nach Anspruch 1, **dadurch gekennzeichnet, dass** der Abstandschritt (P) modifizierbar ist.

**3.** Vorrichtung um Durchführen des Verfahrens nach einem der Ansprüche 1 oder 2, **dadurch gekennzeichnet, dass** sie aufweist:

ein Tragegestell (11), geeignet zum Verschieben auf der Fahrbahn (2);

einen Träger (1), der so auf dem Gestell (11) montiert ist, dass er ständig horizontal gehalten wird, unabhängig von der Neigung der Fahrbahn (2), auf der sich das Gestell bewegt, drei Sensoren (Cav, Cmi, Car) zum kontaktlosen Messen des Abstands, die hintereinander und in gleichem Abstand auf dem Träger angebracht sind und Signale liefern können, die für ihre Höhe über der Fahrbahn repräsentativ sind,

eine Vorrichtung (13) zum Messen der Bewegung des Tragegestells, und

einen Rechner (12), der Signale der Vorrichtung (13) zum Messen der Bewegung und der Sensoren (Cav, Cmi, Car) zum Messen des Abstands aufnimmt, wobei der Rechner (12) gleichzeitig Erfassungen von den Sensoren zur kontaktlosen Abstandsmessung mit einem bekannten Messschritt (P), unabhängig vom Abstand zwischen den Sensoren, auslöst, und eine mathematische Verarbeitung der Ergebnisse der Höhemessungen derart durchführt, dass man das Profil der Fahrbahn erhält.

**Claims**

**1.** A method of reconstituting the profile of a pavement, by moving three contactless distance-measuring sensors (Cav, Cmi, Car) over a pavement (2), the sensors being equidistant and in alignment in the direction of motion, and supplying signals representative of their respective heights (H1, H2, H3) above the pavement at a travel distance pitch (P) which is fixed for any one series of measurements, measuring the distance travelled by one of said sensors, and obtaining information representative of the longitudinal profile of the pavement (2) by subtracting twice the height (H2) measured by the middle sensor (Cmi) from the sum of the heights (H1, H3) measured by the end sensors (Cav, Car), the method being **characterized by**:

causing the sensors (Cav, Cmi, Car) to be carried by a rigid beam held permanently horizontal, simultaneously measuring the height of each of the sensors above the pavement (2) at each travel distance pitch interval (P) independent of the distance between the sensors, and applying mathematical processing to the information representative of the longitudinal profile of the pavement by using direct and inverse Fourier Transforms to deduce therefrom the longitudinal profile of the pavement.

**2.** A method according to claim 1, **characterized by** the fact that the distance pitch (P) is modifiable.

**3.** Apparatus for implementing the method according to claim 1 or claim 2, **characterized by** the fact that it comprises:

a carrier vehicle (11) suitable for being moved over the pavement (2);

a beam (1) mounted on said vehicle (11) in such a manner as to be maintained permanently horizontal, regardless of the slope of the pavement (2) on which said vehicle is travelling, three contactless distance-measuring sensors (Cav, Cmi, Car) are mounted equidistantly and in alignment on said beam (1), the sensors being suitable for delivering signals representative of their respective heights above the pavement;

a device (13) for measuring the distance travelled by the carrier vehicle; and

a computer (12) receiving signals from the device (13) for measuring travel distance and from the distance-measuring sensors (Cav, Cmi, Car), said computer (12) triggering simultaneous acquisitions by the contactless distance-measuring sensors at a known measurement pitch (P) independent of the distance between the sensors, and performing mathematical processing on the results of said height measurements so as to obtain the profile of the pavement.

FIG.1

FIG.2

FIG.3

EP 1 238 245 B1